Europäisches Patentamt

(19) European Patent Office

Office européen des brevets

(11) Publication number: **0 145 371**
**B1**

(12) **EUROPEAN PATENT SPECIFICATION**

(45) Date of publication of patent specification: **04.07.90**

(21) Application number: **84308068.0**

(22) Date of filing: **21.11.84**

(51) Int. Cl.⁵: **F 16 L 59/02**

(54) **Cellular ceramic insulating body and method for making same.**

(30) Priority: **07.12.83 US 558808**

(43) Date of publication of application:
**19.06.85 Bulletin 85/25**

(45) Publication of the grant of the patent:
**04.07.90 Bulletin 90/27**

(84) Designated Contracting States:
**AT BE CH DE FR GB IT LI LU NL SE**

(56) References cited:
**FR-A-2 508 594**
**GB-A- 878 517**
**US-A-3 760 971**
**US-A-3 959 541**

(73) Proprietor: **PITTSBURGH CORNING
CORPORATION
800 Presque Isle Drive
Pittsburgh, Pennsylvania 15239 (US)**

(72) Inventor: **Linton, Robert W.
41 Morris Street
Export, PA 15632 (US)**
Inventor: **Orlowski, Alex W.
107 Meadow Drive
Trafford, PA 15085 (US)**

(74) Representative: **Lambert, Hugh Richmond et al
D. YOUNG & CO. 10 Staple Inn
London, WC1V 7RD (GB)**

## Description

This invention relates to cellular ceramic insulation systems for tubular structures and a method of producing cellular ceramic insulating structures for use therein.

Amongst the various insulating materials that have been used or proposed for the insulation of tubular and other structures, cellular ceramics, such as foamed glass, have received a considerable amount of attention. Amongst various prior art patents relating to the use of cellular ceramics as insulation for metallic structures and parts, such as piping, conduits, and containers, US—A—3,157,204 discloses a ceramic insulation structure comprising a core of substantially rigid, cellular material, such as a foamed vitreous material, surrounded by a thermoset, synthetic resinous material.

US—A—3,325,341 discloses a method of producing a cellular glass body suitable for use as an insulation material, and in which the outer skins of a plurality of cellular glass pellets are fused together to form a body having interconnected interstitial voids which communicate with the exterior surface of such body. The interconnected voids are impregnated in whole or in part with either an inorganic or organic binder.

US—A—3,528,400 discloses a high strength, thermal shock resistant, laminar ceramic insulating body formed from a plurality of thin alternate layers of magnesia, spinel or mixtures thereof such that no two adjacent layers are of the same material.

US—A—3,614,967 discloses a multi-layered insulated pipe coating in which the pipe is surrounded by a preformed insulation, such as cellular glass. Such preformed insulation is surrounded by a mat, which includes a first layer of heat softening resin, a layer of woven glass fabric surrounding the first resin layer, a second layer of resin, a layer of conductive foil, a third layer of resin, and an outer layer of water impervious plastic film. The overlapping edges of the mat are heat sealed together.

US—A—3,760,971 discloses an insulating lining for cryogenic fluid containers comprising a plurality of layers of arcuate blocks of foamed polyvinyl chloride, foamed glass or foamed polyurethane, the outermost layer of blocks being adhesively bonded to the inside wall of the container. At least one further, inner layer of arcuate blocks is adhesively bonded in staggered relationship with the blocks of the first layer by means of an adhesive occupying at least 2 per cent of the area of the opposed faces of the blocks. The non-bonded areas on the opposed faces are preferably provided with a coating of low friction material to prevent frictional wear of those faces as the blocks in each layer undergo thermal expansion and contraction. To permit such expansion and contraction individual blocks within each layer are spaced one from the other with a contractable and expandable insulating material filling the spaces between the blocks.

Finally, the insulating lining is lined with a layer of polyester film.

US—A—3,959,541 discloses a cellular ceramic insulation system for tubular structures comprising arcuate foamed cellular glass blocks disposed about the exterior of the tubular structure and joined lengthwise by means of gypsum cement applied between the opposed longitudinally extending faces of the arcuate blocks. For smaller diameter tubes, the arcuate blocks are of semi-cylindrical configuration and fit together in pairs on opposite sides of the tube to provide a complete annulus of foamed cellular glass insulation material extending therearound. For larger diameter structures a multiplicity of arcuate foamed cellular glass blocks are placed around the structure and bonded one to the other along the longitudinal edges. According to that disclosure two layers of insulation are provided, each comprising a layer of bonded arcuate blocks as described, the two layers being bonded one to the other with a layer of reinforcing material located and adhesively bonded therebetween. The function of the intermediate layer of reinforcing material is partly to prevent fissures and cracks occurring in the inner insulation layer, as a result of thermal expansion and contraction, from extending radially into the outer layer of insulation, and, partly to retain the integrity of the insulation should fissures and cracks appear in the outer layer of insulation as well.

Finally, mention may be made of GB—A—878,517 and FR—A—2,508,594 both of which disclose insulation systems for tubular structures comprising arcuate, semi-cylindrical or semi-circular bodies of insulation material fitting on opposite sides of the structure to be insulated.

As indicated by the above, siliceous cellular insulation are known to be useful for insulation of equipment and piping over a wide temperature range of about −450°F to 800°F (−268° to 427°C) because of their impermeability, high strength, incombustibility, and low absorption of liquids. Such siliceous cellular insulations though, because of their high modulus, or rigidity, their significant thermal expansion coefficient, and low heat transmission may be subject to cracking from high thermal stresses produced by rapid changes in temperature.

The tendency of such siliceous cellular insulations to crack, often referred to as thermal shock, is dependent upon many intrinsic and operational factors, such as the rate of temperature change, the configuration of the member to be insulated, and the thickness of the insulation.

A cellular silica can be manufactured to have an expansion coefficient so low that it can substantially resist thermal shock after being placed red-hot into water. However, the melting point and cellulation temperatures of such a cellular silica are generally in excess of 3000°F (1649°C). Such high temperatures are difficult to maintain economically for large scale production and other problems may be present, such as sublimation of silicon monoxide during manufacturing. The structures described above are, to some extent, designed to avoid that manufacturing problem, but are only achieved by relatively complex manufacturing techniques. What is needed, therefore, is a relatively simple cellular ceramic insulating body having good insulating efficiency and being operable to substantially prevent thermally induced cracking therein and maintain physical integrity at temperatures up to at least 650°F (343°C), and desirably to about 800°F (427°C), and which is easy to manufacture.

In accordance with the preesnt invention, a cellular ceramic insulation system comprises a plurality of shaped cellular ceramic bodies positioned about the tubular structure and secured one to the other by means of a layer of adhesive providing a flexible, thermally stable bond between the said bodies, in which the shaped cellular ceramic bodies are positioned in pairs on opposite sides of the tubular structure with a plurality of such pairs positioned in face-to-face contact one with the other along the length of the tubular structure, thus surrounding the tubular structure along its length with a jacket of cellular ceramic insulation material, the said layer of adhesive material being applied between the end faces within each pair of cellular ceramic bodies and lying in the planes substantially parallel to the axis of the tubular structure, and between the opposed faces of each adjacent pair of cellular ceramic bodies, such opposed faces lying in planes substantially perpendicular to the axis of the tubular structure;

and the individual, cellular ceramic bodies are formed from individual, generally rectangular blocks of cellular ceramic material having the ability to resist thermally induced cracking upto at least 650°F (343°C), the rectangular blocks having a predetermined length L, a predetermined width W and a predetermined height H, height H being substantially equal to the thickness T of each individual ceramic body measured parallel to the axis of the tubular structure.

Preferably the rectangular blocks are shaped into a semi-cylindrical configuration, thereby forming a substantially cylindrical jacket located about the tubular structure and consisting of two halves, each half comprising a stack of adhesively bonded, semi-circular cellular ceramic blocks.

The present invention also provides a method of preparing such a system, comprising:

(a) providing a plurality of generally rectangular blocks of cellular ceramic material having the ability to resist thermally induced cracking upto at least 650°F (343°C), the blocks having a predetermined length L, a predetermined width W and a predetermined height H,

(b) superimposing the blocks in alignment one on top of the other and adhesively bonding the superimposed blocks one to the other by a layer of the adhesive applied between the opposed faces of the superimposed blocks,

(c) forming a channel-shaped recess in said blocks, whereby the superimposed blocks will fit on one side of the tubular structure and match an identically formed stack of superimposed, shaped cellular ceramic blocks positioned on the opposite side of the tubular structure and to be adhesively bonded one to the other by a layer of adhesive applied between the opposed longitudinal faces of the two stacks of superimposed, shaped cellular ceramic blocks, thereby forming an insulating jacket of cellular ceramic material extending around the tubular structure and substantially along its length, the channel-shaped recesses formed in each of said blocks having their axes aligned and parallel to the height H of the blocks.

Some embodiments of the present invention will be described, by way of example, with reference to the accompanying drawings, in which:

Figure 1 is a view in elevation of a cylindrical pipe insulated by cellular ceramic insulating bodies according to the invention with a portion of an insulating body broken away to illustrate placement of the insulating bodies in surrounding relation to the pipe;

Figure 2 is a view in elevation of an insulating body of Figure 1;

Figure 3 is a view in elevation of a plurality of rigid cellular ceramic blocks for illustrating a method of forming an insulating body of the invention.

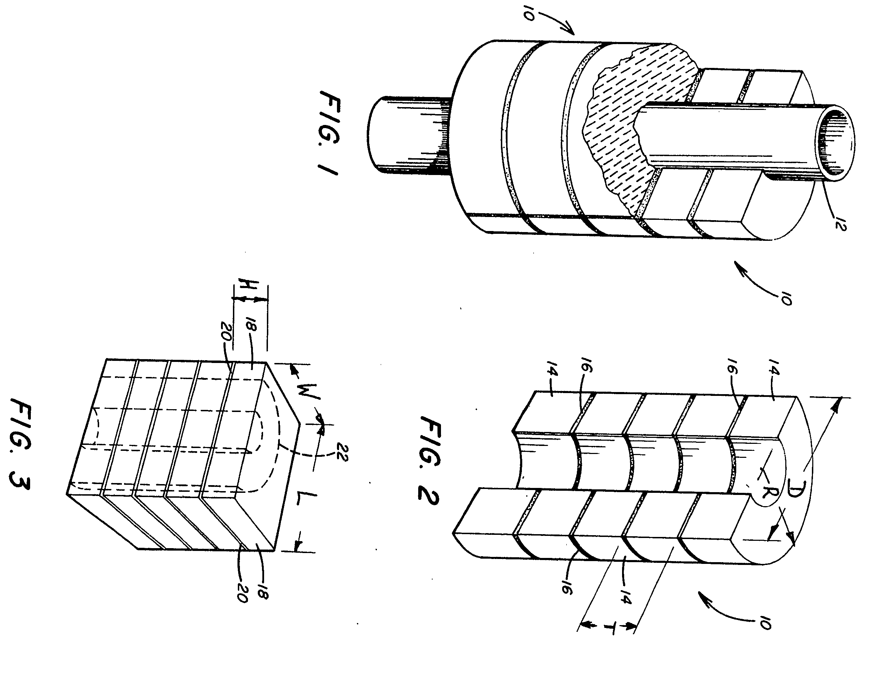

Figure 1 illustrates cellular ceramic insulating bodies 10 used for insulating a pipe 12. Such bodies 10 enclose pipe 12 as shown in Figure 1. The insulating bodies 10 of Figure 1 are maintained in surrounding relation to pipe 12 by appropriate fastening means (not shown) such as metal bands, wires, tapes, overlapping sealed jacketing, adhesive, etc.

Figure 2 illustrates, in elevation, an insulating body 10 of Figure 1 for use in insulating pipe 12. The outer surface of insulating body 10 in Figure 2 has a semi-cylindrical configuration. Insulating body 10 comprises a plurality of rigid cellular ceramic segments 14 adhesively secured to one another by a bonding agent 16, described later herein, and arranged to be positioned adjacent the surface of a member to be insulated, such as pipe 12 of Figure 1. Such composite insulating body is operable to resist thermally induced cracking at temperatures up to at least 650°F (343°C).

It is desirable that the cellular ceramic segments comprise a cellular glass composition. Use of cellular glass segments can provide an insulating body according to the invention that is generally suitable to resist thermally induced cracking over a temperature range from about −100°F (−73°C) to at least 650°F (343°C). Such temperature range should, however, not be construed to limit the scope or application of the invention. Operability to resist cracking over a broader temperature range is possible depending, for example, upon the particular use and the cellular glass composition.

One example of a suitable cellular ceramic material for the cellular ceramic segments is cellular glass formed by mixing pulverulent glass particles with a cellulating agent and forming a cellulatable glass batch as described in U.S. Patent 3,354,024. The formulated glass may comprise, for example, conventional borosilicate or soda lime glass in crushed cullet form and the cellulating agent may comprise a carbonaceous material such as carbon black and the like. Other suitable cellular ceramic materials formed on cellulatable siliceous compositions are disclosed in U.S. Patent 3,441,396.

The cellulatable glass batch is placed in a mold as, for example, a substantially rectangular mold. The cellulatable glass batch is then heated to cellulating temperature. At such temperature, the formulated glass particules soften and coalesce and the cellulating agent reacts to generate a gas and form individual closed cells within the block of cellular glass. The blocks of cellular glass are removed from the molds and annealed. Thereafter, these blocks are trimmed and the cellular ceramic segments comprising the insulating body are formed therefrom, as discussed later herein.

Insulating bodies of the invention may be formed in configurations useful for insulating members of different shapes. The dimensions and configuration of an insulating body of the invention and of the cellular ceramic segments comprising such body are dependent upon the use and application of such body. For example, in insulating a substantially straight pipe, such as pipe 12 of Figure 1, it is customary that the length of an insulating body be approximately 18 inches to about 36 inches (46 to 92 cms). However, the insulating body may be any convenient length, limited only by handling conditions. It is further desirable that the length of each segment comprising the insulating body be about 4 to 5 inches (10 to 15 cms). Under certain conditions, segment length could be larger or smaller.

In choosing a bonding agent for adhesively securing the segments, it is preferred that the bonding agent will not melt or flow at the intended operating temperature or temperatures to which the insulating body will be subjected. Flowable adhesives such as hot asphalt may be used in cases where the entire adhesive bulk will not reach melt or flow temperatures, leaving sufficient unmelted adhesive to maintain physical integrity. The bonding agent chosen should retain sufficient strength yet remain flexible at operating conditions. It is desirable that the hardness of the bonding agent on the Shore A scale should be below 60 at 75°F (24°C) and preferably below 45. The bonding agent should be compatible with the cellular ceramic material. The bonding agent should be high in solid content, such content desirably being about 90% by weight with 95% by weight or higher preferred. It is preferred that the bonding agent be chemically setting, that is the bonding agent be internally curing by reaction of two or more components. It is further desirable that the bonding agent be able to set rapidly to facilitate handling of the insulating body of the invention. A catalyst may be used to accelerate the setting time of ceratin bonding agents, as is known to those in the art.

Examples of suitable bonding agents are urethanes, silicones, or various epoxy adhesives. These bonding agents may be disadvantageous in some applications due to their high cost. Certain silicone adhesives may be used where combustibility of the adhesive is objectionable or where stress corrosion of stainless steel could be a problem. Hot melt adhesives may also be used as a bonding agent up to temperatures where they will not flow or lose their strength. If hot melt adhesives are employed, such as asphalt, coal tar or other bitumens, application should be limited to temperatures that are at least about 50°F (10°C) below the respective softening point of the hot melt adhesive within the majority of the adhesive bulk.

It is desirable for most applications that the bonding agent used in the invention be an asphalt extended, oil extended, or coal-tar extended urethane. An asphalt extended urethane commonly referred to as urethane modified asphalt is generally most desirable.

Adhesives which have a substantial degree of rigidity after curing are generally considered not suitable for use as a bonding agent in the present invention. Examples of such adhesives are the gypsum adhesives. The rigidity of gypsum adhesives, for example, may promote thermal stress failure in cellular glass segments at elevated temperatures up to at least 650°F (343°C).

Figure 3 is illustrative of a method of preparing a composite insulating body of the present invention. Substantially rectangular blocks 18 of cellular ceramic material, such as cellular glass, for example, and having a length L, a width W and a thickness T, are aligned and placed one on top of each other with a layer of a bonding agent 20, such as a urethane modified asphalt, placed between adjacent blocks 18 as shown in Figure 3. Bonding agent 20 adhesively joins blocks 18 into a unitary structure. After bonding agent 20 has cured, the insulating body is cut from such unitary structure by suitable means such as with a core saw. The outline of an insulating body 22 to be cut from such unitary structure is shown in Figure 3, the finished body being shown in Figure 2. In this cutting operation each of the superimposed blocks is cut to provide a plurality of superimposed cellular ceramic insulating bodies of semicircular configuration having a diameter D and a radius R that are less respectively than the length L and the width W of the original rectangular block, and a height H measured along the axis of the structure that is equal to the thickness T.

The dimensions of each block 18 and the total number of blocks 18 required for the formation of an insulating body of the present invention can vary depending upon the particular design requirements for an insulating body and available thicknesses of the blocks.

Alternatively the individual cellular ceramic segments can be cut from individual rectangular blocks of cellular ceramic material and then joined to each other with an appropriate bonding agent.

The following examples 1 and 2 are illustrative of cellular ceramic insulating bodies that do not include the present invention.

Example 1

Two half sections of pipe covering were each fabricated as a single, semi-cylindrical shaped segment. These segments were shaped so as to be able to matingly engage a metallic pipe of 6 inch (15 cms) nominal diameter to provide a 4 inch (10 cms) insulation thickness. The two shaped segments were banded onto the pipe, heated to 600°F (316°C), cooled, and removed from the pipe. Each segment was cracked axially and radially into 5 or 6 pieces and was not reusable.

Example 2

Two half sections of pipe covering were each fabricated as a single, semi-cylindrical shaped segment. These segments were shaped so as to be able to matingly engage a metallic pipe of 6 inch (15 cms) nominal diameter to provide a 4 inch (10 cms) insulation thickness. The two shaped segments were banded onto the pipe, heated to 500°F (260°C), cooled, and removed from the pipe. Each segment was cracked axially and radially into 5 or 6 pieces and was not reusable.

The following examples are illustrative of the improved properties and construction of cellular ceramic insulating bodies of the present invention.

Example 3

Six blocks of a foamed cellular glass material each being 18 inches (46 cms) in width, 24 inches (61 cms) in length and 4 inches (15 cms) in depth, commercially available from Pittsburgh Corning Corporation under the tradename FOAMGLAS were used in the formation of each insulating body. The cellular glass used had a density of approximately 8.5 pounds per cubic foot (136 kg/m$^3$) and a thermal conductivity of about 0.35 B.t.u./hr/sq.ft./°F/in. (0.05 W/mK) at a temperature of 75°F (24°C).

Six rectangularly shaped blocks were adhesively joined together by a urethane modified asphalt adhesive commercially available from Pittsburgh Corning Corporation, designated as PC 88 adhesive. After mixing the components of the adhesive, the adhesive was appropriately applied to the adjoining surfaces of the cellular glass blocks by conventional means such as with a notched trowel or screed. A conventional catalyst such as dibutyl tin dilaurate was sprayed on the applied adhesive to facilitate setting of the adhesive.

After the adhesive had sufficiently cured, an insulating body having an outer surface of semi-cylindrical configuration and having a length approximately 24 inches (61 cms) was cut from the resulting unitary block structure. Such insulating body was cut so as to be able to matingly engage a metallic pipe of 6 inch (15 cms) nominal diameter and provide a 4 inch (10 cms) insulation thickness. A corresponding insulating body of similar configuration was likewise prepared. The two insulating bodies were placed in facing engagement with each other, thereby surrounding a substantially cylindrical pipe. The two insulating bodies were appropriately secured to each other by conventional means.

The cylindrical pipe was then heated to a temperature from 620°F to 660°F (327° to 349°C) and allowed to remain in contact with the composite insulating bodies of the present invention for 168 hours.

At the close of the heating period, it was surprisingly and unexpectedly noted that no cracks or fractures were present in the insulating bodies. The insulating bodies were cooled to 75°F (24°C) and again heated to 620°F (327°C) for 48 hours with no failure.

Example 4

Six blocks of a foamed cellular glass material, each being 18 inches (46 cms) in width, 24 inches (61 cms) in length and 4 inches (10 cms) in depth, commercially available from Pittsburgh Corning Corporation under the tradename FOAMGLAS were used in the formation of each insulating body. The cellular glass used had a density of approximately 8.5 pounds per cubic foot (136 kg/m$^3$) and a thermal conductivity of about 0.35 B.t.u./hr/sq.ft./°F/in. (0.05 W/mK) at a temperature of 75°F (24°C).

Six rectangularly shaped blocks were adhesively joined together by a hot asphalt adhesive. After the adhesive had sufficiently cured, an insulating body having an outer surface of semi-cylindrical configuration and having a length of approximately 24 inches (61 cms) was cut from the resulting unitary block structure. Such insulating body was cut so as to be able to matingly engage a metallic pipe of 6 inch (15 cms) diameter and provide a 4 inch (10 cms) insulation thickness. A corresponding insulating body of similar configuration was likewise prepared. The two insulating bodies were placed in facing engagement with each other, thereby surrounding a substantially cylindrical pipe. The two insulating bodies were appropriately secured to each other by conventional means.

The cylindrical pipe was then heated to a temperature from 600°F to 650°F (316° to 343°C). Some smoke and fumes were present from the hot asphalt adhesive melting and running onto the hot pipe. After cooling, the insulating bodies adhered to the pipe as a result of the hot asphalt melting and running onto the pipe and then solidifying upon cooling.

The pipe was then warmed to 300°F (149°C) to remove the insulating bodies from the pipe. After the insulating bodies had cooled, the insulating bodies were examined and it was surprisingly and unexpectedly found that no cracks or fractures were present in the insulating bodies.

## Claims

1. A cellular ceramic insulation system (10) for tubular structures (12), said system comprising a plurality of shaped cellular ceramic bodies (14) positioned about the tubular structure (12) and secured one to the other by means of a layer of adhesive (16) providing a flexible, thermally stable bond between the said bodies, characterised in that the shaped cellular ceramic bodies (14) are positioned in pairs on opposite sides of the tubular structure (12) with a plurality of such pairs positioned in face-to-face contact one with the other along the length of the tubular structure (12), thus surrounding the tubular structure (12) along its length with a jacket of cellular ceramic insulation material, the said layer of adhesive material (16) being applied between the end faces within each pair of cellular ceramic bodies and lying in the planes substantially parallel to the axis of the tubular structure, and between the opposed faces of each adjacent pair of cellular ceramic bodies, such opposed faces lying in planes substantially perpendicular to the axis of the tubular structure; and in that the individual, cellular ceramic bodies (14) are formed from individual, generally rectangular blocks (18) of cellular ceramic material having the ability to resist thermally induced cracking upto at least 650°F (343°C), the rectangular blocks having a predetermined length L, a predetermined width W and a predetermined height H, height H being substantially equal to the thickness T of each individual ceramic body measured parallel to the axis of the tubular structure (12).

2. A system according to Claim 1, characterised in that the shaped cellular ceramic bodies (14) comprise a cellular glass composition.

3. A system according to Claim 1 or 2, characterised in that the shaped cellular ceramic bodies (14) are of a semi-cylindrical configuration.

4. A system according to Claim 1, 2 or 3, characterised in that the adhesive has a hardness on the Shore A scale of about 60 or lower at 75°F (24°C).

5. A system according to any one of Claims 1 to 4, characterised in that the adhesive is an extended urethane.

6. A system according to Claim 5, characterised in that the extended urethane is an asphalt-extended urethane.

7. A system according to any one of Claims 1 to 4, characterised in that the adhesive comprises asphalt.

8. A method of constructing a cellular ceramic insulating system according to Claim 1 for positioning around a tubular structure (12), the said method being characterised by:

(a) providing a plurality of generally rectangular blocks (18) of cellular ceramic material having the ability to resist thermally induced cracking upto at least 650°F (343°C), the blocks having a predetermined length L, a predetermined width W and a predetermined height H,

(b) superimposing the blocks (18) in alignment one on top of the other and adhesively bonding the superimposed blocks one to the other by a layer (20) of the adhesive applied between the opposed faces of the superimposed blocks,

(c) forming a channel-shaped recess in said blocks (18), whereby the superimposed blocks will fit on one side of the tubular structure and match an identically formed stack of superimposed, shaped cellular ceramic blocks positioned on the opposite side of the tubular structure and to be adhesively bonded one to the other by a layer of said adhesive (16) applied between the opposed longitudinal faces of the two stacks of superimposed, shaped cellular ceramic blocks, thereby forming an insulating jacket of cellular ceramic material extending around the tubular structure and substantially along its length, the channel-shaped recesses formed in each of the blocks (18) having their axes aligned and parallel to the height H of the blocks (18).

9. A method according to Claim 8, in which, in step (c), the blocks (18) are formed into semi-cylindrical bodies (14) having a thickness T that is equal to the height H of the respective rectangular block (18).

10. A method according to Claim 8 or 9, in which the resulting system is as claimed in Claim 2.

11. A method according to any one of Claims 8 to 10, in which the resulting system is as claimed in Claim 4.

12. A method according to Claim 11, in which the resulting system is as claimed in Claim 5.

13. A method according to Claim 11, in which the resulting system is as claimed in Claim 6.

14. A method according to Claim 11, in which the resulting system is as claimed in Claim 7.

15. A thermally insulated structure comprising a tubular structure (12) to be insulated, and a body (10) of insulating material positioned around it, characterised in that the insulation comprises two insulating structures produced by a method claimed in any one of Claims 8 to 14 positioned on opposite sides of the tubular structure (12) and bonded one to the other by a layer of thermally stable, flexible adhesive applied between the two longitudinally opposed faces of the two insulating structures.

16. A thermally insulated structure according to Claim 15, characterised in that the adhesive used to bond the two diametrically opposed insulating structures one to the other in an adhesive as defined in any one of Claims 11 to 14.

## Patentansprüche

1. Zelliges, keramisches Isoliersystem (10) für rohrförmige Gebilde (12), wobei dieses System umfaßt: mehrere geformte, zellige, keramische Körper (14), die um das rohrförmige Gebilde (12) angeordnet und aneinander mit Hilfe einer Schicht aus Klebstoff (16) befestigt sind, der eine flexible, wärmebeständige Bindung zwischen den Körpern herstellt, dadurch gekennzeichnet, daß die geformten, zelligen, keramischen Körper (14) paarweise an gegenüberliegenden Seiten des rohrförmigen Gebildes (12) angeordnet sind, wobei mehrere solche Paare über die Länge des rohrförmigen Gebildes (12) einander berührend angeordnet sind und so das rohrförmige Gebilde (12) über seine Länge mit einem Mantel aus zelligem, keramischem Isoliermaterial umgeben, wobei die Schicht aus Klebstoff (16) zwischen den in zur Achse des rohrförmigen Gebildes im wesentlichen parallelen Ebenen liegenden Endflächen jedes Paares von zelligen, keramischen Körpern und zwischen den zueinander weisenden Flächen der jeweils aneinanderliegenden Paare von zelligen keramischen Körpern aufgebracht ist, welche zueinander weisenden Flächen in zur Achse des rohrförmigen Gebildes im wesentlichten senkrechten Ebenen liegen; und daß die einzelnen zelligen, keramischen Körper (14) aus einzelnen, im allgemeinen rechteckigen Blöcken (18) aus zelligem, keramischem Material geformt sind, das gegen thermisch induziertes Springen bis zu einer Temperatur von mindestens 650°F (343°C) widerstandsfähig ist, wobei die rechteckigen Blöcke eine vorbestimmte Länge L, eine vorbestimmte Breite W und eine vorbestimmte Höhe H haben, und die Höhe H im wesentlichen gleich der parallel zur Achse des rohrförmigen Gebildes (12) gemessenen Dicke T jedes einzelnen keramischen Körpers ist.

2. System nach Anspruch 1, dadurch gekennzeichnet, daß die geformten, keramischen Körper (14) eine zellige Glaszusammensetzung umfassen.

3. System nach Anspruch 1 oder 2, dadurch gekennzeichnet, daß die geformten, zelligen Körper (14) eine halbzylindrische Form aufweisen.

4. System nach Anspruch 1, 2 oder 3, dadurch gekennzeichnet, daß der Klebstoff eine Shore-A-Härte von ungefähr 60 oder weniger bei 75°F (24°C) hat.

5. System nach einem der Ansrpüche 1 bis 4, dadurch gekennzeichnet, daß der Klebstoff ein gestrecktes Urethan ist.

6. System nach Anspruch 5, dadurch gekennzeichnet, daß das gestreckte Urethan ein asphaltgestrecktes Urethan ist.

7. System nach einem der Ansprüche 1 bis 4, dadurch gekennzeichnet, daß der Klebstoff Asphalt umfaßt.

8. Verfahren zur Herstellung eines zelligen, keramischen Isoliersystems nach Anspruch 1 zur Anordnung um ein rohrförmiges Gebilde (12), wobei dieses Verfahren gekennzeichnet ist durch:

(a) Bereitstellen mehrerer im wesentlichen rechteckiger Blöcke (18) aus zelligem, keramischem Material mit einer Widerstandsfähigkeit gegen thermisch induziertes Springen bis zu mindestens 650°F (343°C), wobei die Blöcke eine vorbestimmte Länge L, eine vorbestimmte Breite W und eine vorbestimmte Höhe H aufweisen,

(b) fluchtendes Aufeinanderlegen der Blöcke (18) und Zusammenkleben der übereinander angeordneten Blöcke mit Hilfe einer Schicht (20) des zwischen den zueinander weisenden Flächen der übereinander angeordneten Blöcke aufgetragenen Klebstoffes,

(c) Bilden einer rinnenförmigen Ausnehmung in den Blöcken (18), wodurch die übereinander angeordneten Blöcke an einer Seite des rohrförmigen Gebildes anliegen und mit einem gleich geformten, an der gegenüberliegenden Seite des rohrförmigen Gebildes angeordneten Stapel von übereinander angeordneten, geformten, zelligen Blöcken zusammenpasssen, wobei die beiden Stapel mit Hilfe einer Schicht des zwischen den gegenüberliegenden Längsflächen der beiden Stapel von übereinander angeordneten, geformten, zelligen, keramischen Blöcken aufgebrachten Klebstoffes (16) miteinander verbunden werden und so einen isolierenden Mantel aus zelligem, keramischem Material bilden, der sich um das rohrförmige Gebilde herum und im wesentlichen über seine Länge erstreckt, wobei die Achsen der rinnenförmigen Ausnehmung im jedem Block (18) ineinander liegen und parallel zur Höhe H der Blöcke (18) verlaufen.

9. Verfahren nach Anspruch 8, in welchem die Blöcke (18) in Schritt (c) zu halbzylindrischen Körpern (14) geformt werden, deren Dicke T gleich der Höhe H des jeweiligen rechteckigen Blockes (18) ist.

10. Verfahren nach Anspruch 8 oder 9, in welchem das entstehende System gemäß Anspruch 2 ist.

11. Verfahren nach einem der Ansrpüche 8 bis 10, in welchem das entstehende System gemäß Anspruch 4 ist.

12. Verfahren nach Anspruch 11, in welchem das entstehende System gemäß Anspruch 5 ist.

13. Verfahren nach Anspruch 11, in welchem das entstehende System gemäß Anspruch 6 ist.

14. Verfahren nach Anspruch 11, in welchem das entstehende System gemäß Anspruch 7 ist.

15. Thermisch isolierte Einheit mit einem zu isolierenden rohrförmigen Gebilde (12) und einem um dieses angeordneten Körper (10) aus isolierendem Material, dadurch gekennzeichnet, daß die Isolierung zwei gemäß einem Verfahren nach einem der Ansprüche 8 bis 14 hergestellte isolierende Systeme umfaßt, die an den einander gegenüberliegenden Seiten des rohrförmigen Gebildes (12) angeordnet und mit Hilfe einer Schicht aus thermisch stabilem, flexiblem Klebstoff miteinander verbunden sind, der zwischen den beiden gegenüberliegenden Längsflächen der beiden isolierenden Systeme aufgebracht ist.

16. Thermisch isolierte Einheit nach Anspruch 15, dadurch gekennzeichnet, daß der für die Verbindung der beiden diametral gegenüberliegenden isolierenden Systeme verwendete Klebstoff ein in einem der Ansprüche 11 bis 14 definierter Klebstoff ist.

## Revendications

1. Système d'isolation en céramique cellulaire (10) pour structures tubulaires (12), ledit système comprenant une pluralité de corps façonnés en céramique cellulaire (14) positionnés sur la structure tubulaire (12) et fixés l'un à l'autre au moyen d'une couche d'adhésif (16) fournissant une liaison souple, stable thermiquement entre lesdits corps, caractérisé en ce que les corps en céramique cellulaire façonnés (14) sont positionnés par paires sur les faces opposées de la structure tubulaire (12) avec une pluralité de ces paires positionnées en contact de face-à-face l'une avec l'autre sur la longueur de la structure tubulaire (12), entourant ainsi la structure tubulaire (12) sur sa longueur avec une enveloppe de matériau isolant en céramique cellulaire, ladite couche de matériau adhésif (16) étant appliquée entre les faces d'extrémité à l'intérieur de chaque paire de corps en céramique cellulaire et se situant dans les plans substantiellement parallèles à l'axe de la structure tubulaire, et entre les faces opposées de chaque paire adjacente de corps en céramique cellulaire, ces faces opposées se situant dans des plans substantiellement perpendiculaires à l'axe de la structure tubulaire;

et en ce que les corps en céramique cellulaire, individuels (14), sont formés à partir de blocs individuels, généralement rectangulaires (18) de matériau en céramique cellulaire pouvant résister aux craquelures induites thermiquement au moins jusqu'à 650°F (343°C), les blocs rectangulaires présentant une longueur prédéterminée L, une largeur prédéterminée W et une hauteur prédéterminée H, la hauteur H étant substantiellement égale à l'épaisseur T de chaque corps en céramique individuel mesurée parallèlement à l'axe de la structure tubulaire (12).

2. Système selon la revendication 1, caractérisé en ce que les corps en céramique cellulaire façonnés (14) comprennent une composition de verre cellulaire.

3. Système selon la revendication 1 ou 2, caractérisé en ce que les corps en céramique cellulaire façonnés (14) sont d'une configuration semi-cylindrique.

4. Système selon la revendication 1, 2 ou 3, caractérisé en ce que l'adhésif présente une dureté Shore A à peu près inférieure ou égale à 60 à 75°F (24°C).

5. Système selon l'une quelconque des revendications 1 à 4, caractérisé en ce que l'adhésif est un uréthanne étendu.

6. Système selon la revendication 5, caractérisé en ce que l'uréthanne étendu est un uréthanne étendu d'asphalte.

7. Système selon l'une quelconque des revendications 1 à 4, caractérisé en ce que l'adhésif comprend de l'asphalte.

8. Procédé de construction d'un système d'isolation en céramique cellulaire selon la revendication 1 pour positionnement autour d'une structure tubulaire (12), ledit procédé caractérisé par

(a) la fourniture d'une pluralité de blocs généralement rectangulaires (18) de matériau en céramique cellulaire pouvant résister aux craquelures induites thermiquement au moins jusqu'à 650°F (343°C), les blocs présentant une longueur prédéterminée L, une largeur prédéterminée W et une hauteur prédéterminée H,

(b) la superposition des blocs (18) en alignement l'un sur l'autre et la liaison de manière adhésive des blocs superposés l'un à l'autre par une couche (20) d'adhésif appliqué entre les faces opposées des blocs superposés,

(c) la formation d'un évidement en forme de U dans lesdits blocs (18), afin que les blocs superposés s'ajustent sur un côté de la structure tubulaire et s'adaptent à une pile formée de manière identique de blocs en céramique cellulaire façonnés, superposés, sur la côté opposé de la structure tubulaire et soient liés de manière adhésive l'un à l'autre par une couche dudit adhésif (16) appliqué entre les faces longitudinales opposées des deux piles de blocs en céramique cellulaire façonnés, superposés, afin de former une enveloppe isolante de matériau en céramique cellulaire s'étendant autour de la structure tubulaire et substantiellement sur sa longueur, les évidements en forme de U formés dans chacun des blocs (18) présentant leur axe aligné et parallèle relativement à la hauteur H des blocs (18).

9. Procédé selon la revendication 8, dans lequel, à l'étape (c), les blocs (18) sont formés en corps semi-cylindriques (14) présentant une épaisseur T qui est égale à la hauteur H du bloc rectangulaire respectif (18).

10. Procédé selon la revendication 8 ou 9, dans lequel le système résultant est tel que défini dans la revendication 2.

11. Procédé selon l'une quelconque des revendications 8 à 10, dans lequel le système résultant est tel que défini dans la revendication 4.

12. Procédé selon la revendication 11, dans lequel le système résultant est tel que défini dans la revendication 5.

13. Procédé selon la revendication 11, dans lequel le système résultant est tel que défini dans la revendication 6.

14. Procédé selon la revendication 11, dans lequel le système résultant est tel que défini dans la revendication 7.

15. Structure isolée thermiquement comprenant une structure tubulaire (12) à isoler, et un corps (10) de matériau isolant positionné autour d'elle, caractérisée en ce que l'isolation comprend deux structures isolantes obtenues par un procédé défini dans l'une quelconque des revendications 8 à 14 positionnées sur les côtés opposés de la structure tubulaire (12) et liées l'une à l'autre par une couche d'adhésif souple, thermiquement stable appliqué entre les deux faces opposées longitudinalement des deux structures isolantes.

16. Structure isolée thermiquement selon la revendication 15, caractérisée en ce que l'adhésif utilisé pour lier les deux structures isolantes diamétralement opposées l'une à l'autre est un adhésif tel que défini dans l'une quelconque des revendications 11 à 14.

FIG. 1

FIG. 2

FIG. 3

1